# EUROPÄISCHE PATENTSCHRIFT

(11) **EP 0 700 573 B1**
(45) Veröffentlichungstag und Bekanntmachung des Hinweises auf die Patenterteilung: **01.10.1997**
(21) Anmeldenummer: 94913536.2
(22) Anmeldetag: 06.04.1994
(51) Int. Cl.: H01B 1/12

(54) **DISPERGIERBARES INTRINSISCH LEITFÄHIGES POLYMERPULVER UND VERFAHREN ZU DESSEN HERSTELLUNG**
DISPERSIBLE, INTRINSICALLY CONDUCTIVE POLYMER POWDER AND PROCESS FOR PRODUCING IT
POUDRE DISPERSIBLE D'UN POLYMERE INTRINSEQUEMENT CONDUCTEUR ET PROCEDE PERMETTANT DE LE PREPARER

(30) Priorität: 17.05.1993 DE 4317010
(43) Veröffentlichungstag der Anmeldung: 13.03.1996
(73) Patentinhaber: Zipperling Kessler & Co (GmbH & Co), D-22926 Ahrensburg (DE)
(72) Erfinder: WESSLING, Bernhard, D-22941 Bargteheide (DE); MERKLE, Holger, Jr., D-22926 Ahrensburg (DE); BLÄTTNER, Susanne, D-21031 Hamburg (DE)
(74) Vertreter: UEXKÜLL & STOLBERG
(86) Internationale Anmeldenummer: EP9401060
(87) Internationale Veröffentlichungsnummer: WO9427297

(56) Entgegenhaltungen:
- EP-A- 0 350 083
- EP-A- 0 497 514
- WO-A-89/02155
- J.Electronic Mat.,1986,Band 15(2),Seiten 61-69

## Beschreibung

Aus der DE-A-37 29 566 sind intrinsisch leitfähige Polymere, insbesondere für die technische Anwendung bedeutsame dispergierbare, intrinsisch leitfähige Polymere in Pulverform bekannt. Die in dieser Offenlegungsschrift enthaltenen Definitionen bzw. Begriffsbestimmungen finden auch nachfolgend Anwendung und werden daher in die Offenbarung mit einbezogen.

Die bisher bekannten intrinsisch leitfähigen Polymeren und ebenso ihre dispergierbaren Formen weisen in der Regel sowohl in Pulverform als auch in Form freitragender Filme oder nicht-selbsttragender Beschichtungen Leitfähigkeiten zwischen etwa 1 und 5 S/cm auf. Wie aus der Veröffentlichung von L. Shacklette et al., Proc. 49^{th} SPE Am. Tech. Conf. 1991, 665 ("EMI-Abschirmung") bekannt ist, kann man mit diesen Leitfähigkeiten bei einer Schichtdicke von 3 mm eine Schirmdämpfung von 40 db erreichen, die für viele technische Anwendungen eine Minimal-Anforderung darstellt. Aufgrund der bisher im technischen Maßstab, aber zumeist auch im Labormaßstab nicht überschreitbaren Leitfähigkeit von 1 bis 5 S/cm (also ca. 2,5 × 10⁰ S/cm), sowohl bei Verwendung als als reine Polymere wie auch bei einer Dispersion in einem Polymerblend, und den damit zusammenhängenden erforderlichen Schichtdicken von 3 mm, sind technische Anwendungen naturgemäß beschränkt.

Es besteht deshalb ein Bedarf - nicht nur für Anwendungen in der EMI-Abschirmung -, die Leitfähigkeit von intrinsisch leitfähigen Polymeren zu erhöhen. Insbesondere besteht ein Bedarf, die Leitfähigkeit von dispergierbaren leitfähigen Polymeren, vorzugsweise von Polyanilin, zu erhöhen, um auch die für technische Anwendungen wichtigen Dispersionen (in thermoplastischen oder nicht-thermoplastischen Polymeren, in Lacken oder Lösungsmitteln) mit höherer Leitfähigkeit auszustatten.

In der Wissenschaft sind in den letzten Jahren erhebliche Anstrengungen unternommen worden, höhere Leitfähigkeiten zu erzielen. Hierbei sind bisher folgende Verfahren im Labormaßstab zur Anwendung gelangt:
1. Polymerisation von Polyacetylen in viskosen unpolaren Medien, anschließendes Verstrecken und daran anschließende Dotierung mit Jod (Naarmann und Theophilou, Synthet. Met.) 22, 1 (1987). Hierbei sind Leitfähigkeiten von einigen 10⁴ S/cm erzielt worden. Das Verfahren weist den Nachteil auf, daß es schwer durchzuführen und schwer zu reproduzieren ist und zu einem leitfähigen Polymer führt, das nicht luft- und oxidationsstabil sowie nicht weiterverarbeitbar ist.
2. Polypyrrol kann gelegentlich unter speziellen elektrochemischen Bedingungen zu Folien polymerisiert werden, die eine Leitfähigkeit von einigen 10² S/cm aufweisen. Dieses Verfahren weist den Nachteil auf, daß lediglich freitragende Filme erzeugt werden können, die nicht weiterverarbeitbar sind und bei höheren Temperaturen ebenfalls nicht genügend stabil sind.
3. Neuerdings sind bei Polyanilin höhere Leitfähigkeiten berichtet worden, so zuerst von Y. Cao et al. in Synthet. Met. 48, 91 (1992) und A. Heeger et al. in "Proceedings of the International Conference on Science and Technology of Synthetic Metals", Göteborg 1992 (Synthet. Met. 55-57 (1993), im Druck). Bei diesem Verfahren synthetisiert man mit HCl protoniertes ("dotiertes") Polyanilin, neutralisiert zum Emeraldin und protoniert wieder mit einer anderen Säure, vorzugsweise Camphersulfonsäure, in Gegenwart von z.B. m-Kresol. Dabei entstehen nicht-dispergierbare freitragende Filme, die eine Leitfähigkeit von ca. 1,5 × 10² S/cm aufweisen. Neben der Nicht-Dispergierbarkeit und dem großen Aufwand des Verfahrens ist ein weiterer Nachteil darin zu sehen, daß ein Teil des m-Kresols in der leitfähigen, filmförmigen Zusammensetzung verbleibt, und daß sich sowohl beim Verfahren als auch im späteren Gebrauch toxikologische Probleme ergeben. Das Prinzip des Verfahrens besteht nach Angaben der Autoren sowie nach Interpretationen anderer Wissenschaftler (u.a. A. McDiarmid) darin, daß Camphersulfonsäure eine Löslichkeit von Polyanilin induziert ("Camphersulfonic acid induced solubility of PAni") und m-Kresol als Sekundär-Dotierungsmittel ("secondary dopant") agiert. Untersuchungen von A. Heeger und A. McDiarmid haben ergeben, daß durch das Verfahren die Kristallinität des Polyanilins erhöht wird.
4. N. Theophilou et al., Solid State Sci 91 (Kuzmany et al.ed.), 29 (1989) haben in früherer Zeit auch bereits über höhere Leitfähigkeiten von ca. 10² S/cm berichtet, wenn neutrale Polyanilinfilme (Filme des Emeraldin) verstreckt und anschließend dotiert wurden. Auf diesem Gebiet sind jedoch keine breiten Arbeiten durchgeführt worden.

Der Nachteil der bisher bekannten Verfahren besteht also zusammenfassend darin, daß komplizierte, mehrschrittige Verfahren, und/oder ein nachträgliches Dotieren erforderlich sind, und daß andere grundsätzliche Nachteile bestehen, vor allem die Tatsache, daß die entstehenden Produkte nicht mehr weiterverarbeitbar bzw. dispergierbar sind. Es besteht also ein Bedarf, ein dispergierbares, intrinsisch leitfähiges Polymer, vorzugsweise ein dispergierbares Polyanilin, in einer für die weitere Verarbeitung geeigneten Pulverform zu schaffen, das eine um mindestens eine Größenordnung höhere Leitfähigkeit als die bisher vorliegenden dispergierbaren Polyanilintypen mit etwa 2,5 × 10⁰ S/cm aufweist.

Der Erfindung liegt somit die Aufgabe zugrunde, ein Verfahren zur Herstellung eines dispergierbaren, elektrisch leitfähigen Polymers, vorzugsweise Polyanilin, in Pulverform, das eine Leitfähigkeit von 2,5 × 10¹ bis 2,5 × 10⁵ S/cm aufweist, bereitzustellen.

### Die Erfindung

Die Erfindung besteht darin, ein nach den Vorschriften des Patentes DE-A-37 29 566 hergestelltes dispergierbares, intrinsisch leitfähiges Polymer, vorzugsweise Polyanilin, nach Polymerisation und Aufarbeitung - wobei es nicht wesentlich ist, ob das erhaltene Polymer bereits vollständig trocken ist oder nicht - in einem zweiten Schritt in Gegenwart eines nicht-polymeren polaren Stoffes zu dispergieren. Dabei hat der polare Stoff (der auch als "Dispersionshilfsstoff" bezeichnet werden könnte) folgende Eigenschaften:
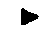 er hat vorzugsweise eine Oberflächenspannung von mehr als 30 dyn/cm,
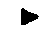 er ist nicht elektrisch leitfähig (d.h. er weist eine elektrische Leitfähigkeit von weniger als 10⁻⁶ S/cm auf),
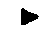 er kann flüssig oder fest sein,
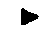 er wirkt gegenüber dem eingesetzten leitfähigen Polymer inert, d.h. geht keine nennenswerten chemischen Reaktionen mit ihm ein; vor allem sind oxidative oder reduktive sowie Säure-Base-Reaktionen nicht erwünscht,
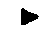 er ist unter gewöhnlichen Bedingungen nicht unbedingt ein Dispersionshilfsmittel.

Beispiele für solche polaren Stoffe sind
a) Festkörper: Bariumsulfat; Titandioxid, insbesondere ultrafeines Titandioxid mit einer Korngröße von weniger als 300 nm; organische Pigmente wie Pigment Gelb 18;
b) inerte Lösungsmittel: Wasser, DMF, DMSO, γ-Butyrolacton, NMP und andere Pyrrolidon-Derivate, Dioxan, THF.
wobei diese Aufzählung beispielhaft und keineswegs limitierend ist.

Es ist erfindungswesentlich, daß die eingesetzten Stoffe zusammen mit dem Polyanilin oder anderen dispergierbaren, intrinsisch leitfähigen Polymeren unter Anwendung ausreichender Scherkräfte so lange aufgerieben und/oder dispergiert wird, bis die gewünschte erhöhte elektrische Leitfähigkeit erreicht ist, wobei diese Dispersion in Pulverform in Form einer stich- oder pumpfähigen Breiform oder in Form einer fließfähigen Suspension erfolgt. Die Dispersion kann in Schnellmischern (z.B. sog. Fluid-Mischern) oder unter Ultraschall während mindestens 3 Minuten erfolgen. In Kugelmühlen, auf Dreiwalzen-Stühlen oder in anderen Aggregaten hoher Scherkraft wird eine längere Behandlungszeit, z.B. von mindestens 6 Stunden benötigt. Die gleichzeitige Anwendung eines elektrischen Feldes, insbesondere eines elektrischen Wechselfeldes mit Frequenzen zwischen 10 kHz und 10 GHz, kann von Vorteil sein; in diesem Fall werden meist mehr als 24 Stunden benötigt.

Der polare, nicht-leitfähige und gegenüber dem intrinsisch leitfähigen Polymer inerte Stoff wird vorzugsweise in einer solchen Menge zugesetzt, daß sich zwischen dem leitfähigen Polymerpulver und dem polaren Stoff ein Gewichts-Verhältnis zwischen 2:1 und 1:10 ergibt.

Nach der Dispersion des intrinsisch leitfähigen Polymeren in Gegenwart des polaren, nicht leitfähigen, inerten Stoffes kann man z.B. unmittelbar einen Pulver-Preßling herstellen (z.B. in einer Preßeinrichtung, wie sie für die Herstellung von KBr-Preßlingen für die Infrarot-Spektroskopie verwendet wird). Wenn der zweite Zusatzstoff in einer Menge von zwischen 50 und 200 Teilen auf 100 Teile des leitfähigen Polymeren zugesetzt worden ist, kann man direkt einen Pulver-Preßling erzeugen. Dieser weist bereits Leitfähigkeiten von mehr als 2,5 × 10¹ S/cm auf. Man kann aber auch den polaren Zusatzstoff durch geeignete Techniken wie z.B. Lösen oder Extrahieren entfernen und das erhaltene leitfähige Polymer, das nach wie vor ein dispergierbares Pulver ist, trocknen, und anschließend einen Preßling herstellen. Auch dieser zeigt eine Leitfähigkeit von mindestens 2,5 × 10¹ S/cm. Leitfähigkeiten zwischen 2,5 × 10¹ S/cm und 2,5 x 10² S/cm sind regelmäßig und reproduzierbar zu erzielen, insbesondere wenn das kommerziell unter dem Handelsnamen VERSICON® (Allied Signal Inc., Morristown) erhältliche Polyanilin, das nach den Vorschriften der DE-B-37 29 566 hergestellt ist, verwendet wurde. Leitfähigkeiten oberhalb einiger 10² bis zu 2,5 × 10⁵ S/cm sind ebenfalls möglich.

Das Entfernen des zugesetzten polaren, inerten und nichtleitfähigen Stoffes ist jedoch nicht erforderlich, solange die weitere Verarbeitung und die Anwendung des leitfähigen Polymeren nicht durch die Anwesenheit des zugesetzten Stoffes gestört wird. Die Leitfähigkeit des Polymerpulvers wird durch die Anwesenheit des polaren Dispersionshilfsstoffes nicht beeinträchtigt.

Die erhaltenen dispergierbaren Pulver intrinsisch leitfähiger Polymerer, insbesondere die erfindungsgemäß erhältlichen dispergierbaren Polyanilin-Pulver, sind nach den bereits früher beschriebenen Verfahren dispergierbar bzw. weiter verarbeitbar und führen überraschenderweise auch in polymerhaltigen Dispersionen (Polymerblends oder Lacken) zu extrem hohen Leitfähigkeiten. So sind z.B. bei Polyanilin-Konzentrationen zwischen 25% und 40% Leitfähigkeiten von deutlich mehr als 2,5 × 10¹ S/cm beobachtet worden und möglich, auch nach weiterer thermoplastischer oder lackierender Verarbeitung. Die erfindungsgemäßen dispergierbaren Polyanilinpulver eignen sich also nach dem Dispersionsverfahren uneingeschränkt zur weiteren Verarbeitung, sowohl in reiner Form als auch in Form von Polymerblends, Lacken usw.

Eine Deutung für die hohe Leitfähigkeit des neuartigen intrinsisch leitfähigen Polymerpulvers oder eine Erklärung für den überraschenden Erfolg des Verfahrens kann noch nicht gegeben werden. Während die im Stand der Technik beschriebenen bisher bekannten Verfahren darauf beruhen, daß die Ketten der leitfähigen Polymeren umorientiert und vorzugsweise verstreckt werden, greift das hier beschriebene Verfahren nicht bei den Ketten, sondern bei den Primärteilchen der leitfähigen Polymeren an. Es ist denkbar, daß isolierende Schmutzschichten auf der Oberfläche der Primärteilchen der leitfähigen Polymeren "weggerieben" werden, wobei sich dies allerdings aufgrund der geringen Mengen einer analytischen Beurteilung entzieht. Ebenso ist denkbar, daß im Verlauf des Dispersionsprozesses die Primärteilchen eine andersartige Orientierung zueinander gewinnen, während die Anordnung der Ketten in den Primärteilchen aufgrund der angewendeten Verfahrensbedingungen keine Veränderung erleiden kann.

Wenn man nach Nimtz et al. (Synthet. Met. 45, 197 (1991) leitfähige Polymere als ultrafeine und quantenmechanisch in der Leitfähigkeit begrenzte Metallteilchen ansieht, könnte eine andersartige Orientierung der Teilchen zueinander die Korrelationslänge der Elektronenwellen verlängern und somit eine höhere Leitfähigkeit verursachen. Dies alles sind jedoch zum derzeitigen Zeitpunkt Spekulationen, mit denen lediglich unterstrichen werden soll, daß aus dem bisher vorliegenden Wissensstand keinerlei Hinweise darauf abzuleiten waren, daß das hier beschriebene Dispersionsverfahren zu einer bislang nicht beobachteten Erhöhung der Leitfähigkeit für dispergierbare Pulver intrinsisch leitfähiger Polymerer führen würde.

Der entscheidende Vorteil des neuen Verfahrens ist darin zu sehen, daß ein allgemein anwendbares Verfahren für dispergierbare Pulver leitfähiger Polymerer, vorzugsweise Polyanilin, geschaffen wurde, das wiederum einen für weitere Verarbeitungsverfahren geeigneten dispergierbaren pulverförmigen Rohstoff zur Verfügung stellt.

Zur Erläuterung der Erfindung sollen die nachfolgenden Beispiele dienen.

### Beispiel 1

Polyanilin (VERSICON®, Handelsprodukt der Allied Signal Inc., Morristown) wurde als trockenes Pulver mit den in der nachfolgenden Tabelle verwendeten Stoffen in dem jeweils angegebenen Verhältnis in einem Laborschnellmischer 3 Minuten lang intensiv dispergiert. Anschließend wurde in einer Presse, mit der man KBr für Infrarot-Spektren zu transparenten Pillen (Durchmesser 13 mm) preßt, bei einem Druck von 10 t mindestens 30 Sekunden lang so gepreßt, daß man einen festen Preßling entnehmen konnte. Dieser wurde in einer 4-Punkt-Meßzelle auf seine Leitfähigkeit hin geprüft. Dabei wurden die in der Tabelle angegebenen Leitfähigkeitswerte ermittelt.

**Tabelle 1**

| Nr. | Inert-Zusatzstoff | Verhältnis PAni: Zusatzstoff | Leitfähigkeit S/cm |
|---|---|---|---|
| 1.1 (Vergleichsversuch) | Polyanilin Pulver (VERSICON®) | - | 5 · 10⁰ |
| 1.2 | Butyrolacton | 1 : 0,5 | 3 · 10¹ |
| 1.3 | Butyrolacton | 1 : 1 | 4 · 10¹ |
| 1.4 | Butyrolacton | 1 : 2 | 6,5 · 10¹ |
| 1.5 | Paliotolgelb K0961 | 3 : 1 | 2,5 · 10¹ |
| 1.6 | n-Methyl-2-pyrrolidon | 3 : 1 | 3 · 10¹ |

### Beispiel 2

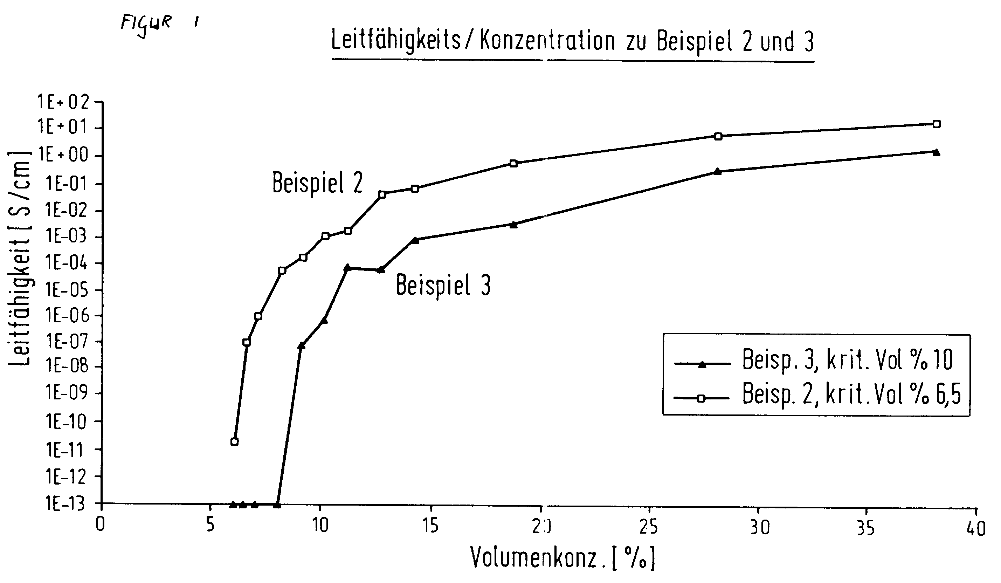

Das bei den Versuchen aus Beispiel 1.3 enthaltene Pulver wurde in unterschiedlichen Konzentrationen in einem Laborkneter mit PETG 6763 (einem Polyethylenterephthalat-Copolymer der Fa. Eastman Kodak) in der Schmelze bei ca. 190°C dispergiert. Das resultierende Polymerblend wurde zu Platten gepreßt, abgekühlt und in einer 4-Punkt-Meßzelle auf seine Leitfähigkeit geprüft. Dabei erhielt man eine kritische Volumenkonzentration von zwischen 6 und 8 Vol.-% (siehe Figur 1).

### Beispiel 3 (Vergleichsversuch)

VERSICON®-Pulver, das nicht gemäß Beispiel 1 nachdispergiert wurde, wurde in der gleichen Presse zu einer Pille gepreßt. Hierbei ergab sich eine Leitfähigkeit von 3 S/cm. Aus dem gleichen Pulver wurde eine weitere Probe entnommen und entsprechend Beispiel 2 in PETG 6763 in der Schmelze dispergiert. Dabei ergab sich eine kritische Volumenkonzentration von 10 % (siehe Figur 1).

### Beispiel 4

Das Produkt von Versuch Nr. 1.3 wurde in PMMA Degalan LP 64/12 in einer Konzentration von 30 % in der Schmelze bei ca. 180°C eingemischt. Dabei ergab sich eine Leitfähigkeit von 4 · 10¹ S/cm.

### Beispiel 5

Die folgenden Versuche wurden unter Ultraschall durchgeführt, wobei
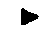 im Falle einer Suspension ein Reagenzglas in ein Ultraschallbad getaucht und intensiv von außen ultrabeschallt wurde,
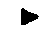 im Falle einer trockenen pulverförmigen oder breiförmigen Mischung eine Sonotrode (wie in EP-B-168 620 beschrieben) direkt in die Mischung eingetaucht wurde. Dabei ergaben sich folgende Leitfähigkeitswerte bei Preßlingen, die wie in Beispiel 1 hergestellt worden sind.

**Tabelle 2**

| Nr. | Inert-Zusatzstoff | Verhältnis PAni:Zusatzstoff | Leitfähigkeit S/cm |
|---|---|---|---|
| 5.1 (Vergleichsversuch) | Polyanilin Pulver (VERSICON®) | - | 5 |
| 5.2 | Butyrolacton | 1 : 1 | 4 · 10¹ |
| 5.3 | Butyrolacton | 1 : 5 | 1 · 10² |

## Patentansprüche

1. Dispergierbares, intrinsisch leitfähiges Polyanilinpulver, dadurch gekennzeichnet, daß es eine elektrische Leitfähigkeit (gemessen in einer 4-Punkt-Meßzelle an einem Pulverpreßling) von 2,5 × 10¹ bis 2,5 × 10⁵ S/cm aufweist.

2. Verfahren zur Herstellung von intrinsisch leitfähigem Polymerpulver mit einer elektrischen Leitfähigkeit (gemessen in einer 4-Punkt-Meßzelle an einem Pulverpreßling) von 2,5 × 10¹ bis 2,5 × 10⁵ S/cm, dadurch gekennzeichnet, daß ein dispergierbares, intrinsisch leitfähiges Polymer in Pulverform mit einer Ausgangsleitfähigkeit von 1 bis 5 S/cm in Gegenwart eines gegenüber dem leitfähigen Polymer inerten, nicht elektrisch leitfähigen, nicht-polymeren polaren Stoffes unter Anwendung ausreichender Scherkräfte so lange aufgerieben und/oder dispergiert wird, bis die gewünschte erhöhte elektrische Leitfähigkeit erreicht ist.

3. Verfahren nach Anspruch 2, dadurch gekennzeichnet, daß das intrinsich leitfähige Polymerpulver ein Polyanilinpulver ist.

4. Verfahren nach Anspruch 3, dadurch gekennzeichnet, daß der polare Stoff eine Oberflächenspannung von >30 dyn/cm aufweist.

5. Verfahren nach Anspruch 3 oder 4, dadurch gekennzeichnet, daß das intrinsisch leitfähige Polymer mit dem polaren Stoff in einem Gewichts-Verhältnis von 2 : 1 bis 1 : 10 vorliegt und anschließend dispergiert wird.

6. Verfahren nach einem der Ansprüche 3 bis 5, dadurch gekennzeichnet, daß nach dem Dispersionsvorgang der polare Stoff durch selektives Lösen oder Extrahieren entfernt wird.

7. Verfahren nach einem der Ansprüche 3 bis 6, dadurch gekennzeichnet, daß das Dispergieren in einem Schnellmischer durchgeführt wird.

8. Verfahren nach einem der Ansprüche 3 bis 7, dadurch gekennzeichnet, daß das Dispergieren in einer Kugelmühle durchgeführt wird.

9. Verfahren nach einem der Ansprüche 3 bis 8, dadurch gekennzeichnet, daß das Dispergieren unter Ultraschall durchgeführt wird.

10. Verfahren nach einem der Ansprüche 3 bis 9, dadurch gekennzeichnet, daß das Dispergieren in Gegenwart eines elektrischen Feldes durchgeführt wird.

11. Verfahren nach Anspruch 10, dadurch gekennzeichnet, daß das Dispergieren in Gegenwart eines elektrischen Wechselfeldes mit einer Frequenz zwischen 10 kHz und 10 GHz durchgeführt wird.

## Claims

1. Dispersible intrinsically conductive polyaniline powder, characterized in that it has an electrical conductivity (measured in a 4-point measuring cell on a powder compact) of from 2.5 × 10¹ to 2.5 × 10⁵ S/cm.

2. Process for preparing intrinsically conductive polymer powder having an electrical conductivity (measured in a 4-point measuring cell on a powder compact) of from 2.5 × 10¹ to 2.5 × 10⁵ S/cm, characterized in that a dispersible, intrinsically conductive polymer in powdered form having an initial conductivity of from 1 to 5 S/cm is ground up and/or dispersed, in the presence of a nonpolymeric, polar, electrically nonconductive substance which is inert with respect to the conductive polymer, over a sufficiently long period while adequate shear forces are employed, until the desired increased electrical conductivity has been achieved.

3. Process according to Claim 2, characterized in that the intrinsically conductive polymer powder is a polyaniline powder.

4. Process according to Claim 3, characterized in that the polar substance has a surface tension of >30 dyn/cm.

5. Process according to Claim 3 or 4, characterized in that the intrinsically conductive polymer is present together with the polar substance in a weight ratio of from 2:1 to 1:10 and is then dispersed.

6. Process according to any one of Claims 3 to 5, characterized in that the polar substance, after the dispersion operation, is removed by selective dissolution or extraction.

7. Process according to any one of Claims 3 to 5, characterized in that the dispersion operation is carried out in a high-speed mixer.

8. Process according to any one of Claims 3 to 7, characterized in that the dispersion operation is carried out in a ball mill.

9. Process according to any one of Claims 3 to 8, characterized in that the dispersion operation is carried out under the influence of ultrasound.

10. Process according to any one of Claims 3 to 9, characterized in that the dispersion operation is carried out in the presence of an electrical field.

11. Process according to Claim 10, characterized in that the dispersion operation is carried out in the presence of an electrical alternating field having a frequency of between 10 kHz and 10 GHz.

## Revendications

1. Poudre dispersable de polyaniline intrinsèquement conductrice, caractérisée en ce qu'elle présente une conductivité électrique (mesurée sur une pastille de poudre pressée dans une cellule de mesure à 4 points) de 2,5 x 10¹ jusqu'à 2,5 x 10⁵ S/cm.

2. Procédé de fabrication d'une poudre de polymère intrinsèquement conducteur avec une conductivité électrique (mesurée sur une pastille de poudre pressée dans une cellule de mesure à 4 points) de 2,5 x 10¹ jusqu'à 2,5 x 10⁵ S/cm, caractérisé en ce que l'on broie et/ou on disperse sous la forme d'une poudre un polymère intrinsèquement conducteur dispersable avec une conductivité initiale de 1 à 5 S/cm en présence d'un matériau polaire non -polymère, électriquement non-conducteur, inerte vis à vis du polymère conducteur, en utilisant des forces de cisaillement suffisantes jusqu'à ce que la conductivité électrique augmentée souhaitée soit atteinte.

3. Procédé selon la revendication 2, caractérisé en ce que la poudre de polymère intrinsèquement conducteur est une poudre de polyaniline.

4. Procédé selon la revendication 3, caractérisé en ce que le matériau polaire présente une tension superficielle > 30 dyne/cm.

5. Procédé selon la revendication 3 ou 4, caractérisé en ce que le polymère intrinsèquement conducteur est présent avec le matériau polaire dans un rapport en poids de 2:1 jusqu'à 1:10 et est ensuite dispersé.

6. Procédé selon l'une des revendications 3 à 5, caractérisé en ce que l'on élimine le matériau polaire par dissolution ou extraction sélective après l'étape de dispersion.

7. Procédé selon l'une des revendications 3 à 6, caractérisé en ce que l'on effectue la dispersion dans un malaxeur rapide.

8. Procédé selon l'une des revendications 3 à 7, caractérisé en ce que l'on effectue la dispersion dans un broyeur à billes.

9. Procédé selon l'une des revendications 3 à 8, caractérisé en ce que l'on effectue la dispersion sous ultrasons.

10. Procédé selon l'une des revendications 3 à 9, caractérisé en ce que l'on effectue la dispersion en présence d'un champ électrique.

11. Procédé selon la revendication 10, caractérisé en ce que l'on effectue la dispersion en présence d'un champ électrique alternatif avec une fréquence comprise entre 10 kHz et 10 GHz.
